# Europäisches Patentamt

# European Patent Office

# Office européen des brevets

(11) Veröffentlichungsnummer: **0 053 715**
**B1**

(12) **EUROPÄISCHE PATENTSCHRIFT**

(45) Veröffentlichungstag der Patentschrift:
01.08.84

(51) Int. Cl.³: **B 65 D 77/06**

(21) Anmeldenummer: **81109206.3**

(22) Anmeldetag: **29.10.81**

(54) **Verpackungsbehälter mit Auskleidung.**

(30) Priorität: **04.12.80 DE 3045710**

(43) Veröffentlichungstag der Anmeldung:
**16.06.82 Patentblatt 82/24**

(45) Bekanntmachung des Hinweises auf die Patenterteilung:
**01.08.84 Patentblatt 84/31**

(84) Benannte Vertragsstaaten:
**AT BE CH DE FR GB IT LI LU NL SE**

(56) Entgegenhaltungen:
**AT - B - 357 929**
**DE - A - 2 915 228**

(73) Patentinhaber: **Henkel Kommanditgesellschaft auf Aktien, Postfach 1100 Henkelstrasse 67, D-4000 Düsseldorf-Holthausen (DE)**

(72) Erfinder: **vom Hofe, Dieter, Uedesheimerweg 2, D-5000 Köln 71 (DE)**
Erfinder: **Meyer, Klaus, Quirinusstrasse 33, D-4044 Kaarst 2 (DE)**

## Beschreibung

Die Erfindung betrifft einen Verpackungsbehälter mit mechanisch stabilisierender, aus Papier, Pappe, Metall oder einer Kombination daraus bestehender Hülle, einer darin eingesetzten, dichtenden, als Kunststoffblase mit angeformtem, sowie aus der Hülle hervorragendem Halsteil ausgebildeten Auskleidung, welche ausgehend von einem geblasenen Vorformling in die in einem getrennten Verfahren hergestellte Hülle eingesetzt ist, wobei die Hülle und die Auskleidung mit Hilfe eines mit der Auskleidung verbundenen, einer Öffnung der Hülle angepassten Adapterdeckels miteinander gekoppelt sind.

In der DE-A-2 915 228 wird ein Verpackungsbehälter beschrieben, der im wesentlichen aus einer dünnwandigen, das jeweilige, z.B. flüssige oder rieselfähige Produkt umhüllenden inneren Blase mit angeformtem Mündungs- oder Halsteil und einer die Blase bzw. Auskleidung umgebenden, formstabilisierenden äusseren Umhüllung bzw. Hülle besteht. Die Hülle kann beispielsweise auch eine Faltschachtel sein. Der Verpackungsbehälter ist durch quantitative und qualitative Abstimmung der verwendeten Packstoffe untereinander so auszubilden bzw. herzustellen, dass jeweils für bestimmte Volumenbereiche ein wirtschaftlich besonders günstiges Endprodukt entsteht, welches je nach Wunsch lebensmittelecht, chemikalienbeständig, in hohem Masse gasdicht, in leerem Zustand platzsparend zu lagern und zu transportieren, rohstoffsparend herzustellen, nach Gebrauch leicht zusammenzulegen, hervorragend zu dekorieren und/oder auf beliebige Weise zu verschliessen ist. Schwierigkeiten bereitet das Zusammensetzen von Hülle und Auskleidung beim Konfektionieren der Verpackung.

Auch aus der AT-B-357 929 ist ein Behälter für flüssige oder rieselfähige Materialien mit einem das Füllmaterial aufnehmenden flexiblen Beutel bekannt, der von einem formbeständigen Behältnis umgeben ist. Der Beutel ist weiterhin an seiner Aussenseite mit einer im Bereich einer Öffnung im Behältnis angeordneten Ausgiesseinrichtung dicht verbunden und die Verbindungszone umgibt den Ausgusskanal der Ausgiesseinrichtung. Die Anordnung ist dergestalt getroffen, dass der flexible Beutel den Ausgusskanal an der inneren Seite der Ausgiesseinrichtung im flachen Zustand überdeckt und die dichte Verbindung zum Beutel und Ausgiesseinrichtung nahe dem Umfang des Ausgusskanals vorgesehen ist.

Bei diesem bekannten Behälter wird die spezielle Ausbildung der Auskleidung des Verpackungsbehälters offengelassen. Gerade dieser essentielle Bestandteil der Verpackung im Zusammenwirken mit dem Adapterdeckel ist aber für die einwandfreie Funktion des Behälters eine unabdingbare Voraussetzung.

Demgemäss bestand die Aufgabe darin, eine Auskleidung für Verpackungsbehälter mit integrierter Hülle zu schaffen, wobei die Einzelteile der Verpackung auf bekannten Anlagen herzustellen sind und das Zusammenfügen dieser Einzelteile in den Produktionsprozess wenig aufwendig zu integrieren ist.

Die Lösung besteht in der anspruchsgemässen Auskleidung für einen Verpackungsbehälter.

Bei dem Adapterdeckel handelt es sich um einen «Deckel» im allgemeinen Sinne, d.h. der Adapterdeckel kann irgendeinen Verschluss im Kopf, in der Wand oder im Boden der Hülle darstellen. Erfindungsgemäss wird der zum Verbinden von Kunststoffblase bzw. Auskleidung bereits vor dem Umformen, insbesondere Aufblasen, des zum Herstellen der Auskleidung verwendeten Vorformlings über den Vorformling geschoben und dort in einer gegen Verdrehung in Umfangsrichtung gesicherten Position arretiert. Durch Umformen des Vorformlings im Streckblasverfahren erfolgt dann — vor oder nach dem Einschieben in die Hülle — auch ein Sichern des Adapterdeckels in axialer Richtung der aus dem Vorformling hergestellten Blase bzw. Auskleidung. Auf diese Weise entsteht eine feste, unlösbare Verbindung zwischen Adapterdeckel und Auskleidung. Der Adapterdeckel soll vorteilhaft so ausgebildet sein, dass durch einfaches Einschieben in die Öffnung einer Hülle, beispielsweise einer vorverklebten Faltschachtel, die an ihrer Öffnung eine entsprechende Gestaltung aufweist, mit der Hülle eine sichere, nur durch Zerstören der Verpackung lösbare Verbindung herzustellen ist.

Für ein relativ einfaches Zusammenfügen von einerseits Auskleidung und Adapterdeckel und andererseits äusserer Hülle ist es im Rahmen des erfindungsgemässen Verfahrens von besonderer Bedeutung, dass durch Vorkonfektionieren des aus Vorformling bzw. Auskleidung und Adapterdeckel bestehenden einen Bauelements, welches bereits auf der Streckblasmaschine herzustellen ist, der für das Fertig-Konfektionieren wesentliche Adapterdeckel bereits vor dem Strecken und Aufblasen des Vorformlings auf der Auskleidung festgelegt wird. Auf diese Weise entfällt eine sonst nur schwer zu bewältigende Manipulation mit der forminstabilen fertigen Auskleidung einerseits und dem Adapterdeckel oder einem ähnlichen Bauelement andererseits.

Die Erfindungsaufgabe wird dadurch gelöst, dass an dem Hals des Vorformlings angeformte im Hinblick auf ein selbständiges Einfädeln von Fixiernocken des Adapterdeckels ausgebildete Fixiernocken des Vorformlings zum Festlegen des Adapterdeckels relativ zum Vorformling in der Umfangsrichtung vorhanden sind. Weiterhin sind Arretiermittel am Adapterdeckel zum Festlegen auf der Hülle sowie angeformte im Hinblick auf ein Einfädeln von Fixiernocken der Auskleidung bzw. des Vorformlings ausgebildete Fixiernocken am Rande einer Deckelöffnung zum Festlegen des Deckels in der Umfangsrichtung vorhanden. Schliesslich ist die Hülle mit Mitteln zum Einrasten des Adapterdeckels am Rande des Umfangs der zum Einschieben der Auskleidung dienenden und mit dem Deckel zu verschliessenden Öffnung versehen.

Anhand der schematischen Darstellung von Ausführungsbeispielen werden weitere Einzelheiten der Erfindung erläutert. Es zeigen:

Fig. 1 ein Herstellungs- und Konfektionierschema;

Fig. 2 einen Vorformling teilweise im Schnitt;

Fig. 3 bis 5 einen Adapterdeckel im Schnitt, in der Draufsicht und in der Ansicht von unten;

Fig. 6 bis 8 verschiedene Faltschachteln; und

Fig. 9 bis 11 Verfahrensschritte beim Konfektionieren der Baueinheit Auskleidung/Adapterdeckel mit einer Faltschachtel.

Die Erfindung wird im folgenden teilweise anhand des Beispiels von Faltschachteln beschrieben. Sie ist jedoch sinngemäss ohne weiteres übertragbar auf die Verwendung anderer Hüllen, z.B. eines Wickelrohrs mit gebördeltem Rand, eines Metallgefässes mit entsprechender Kopfdeckelgestaltung, eines trommelähnlichen Gebildes und Gebinden ähnlicher Art.

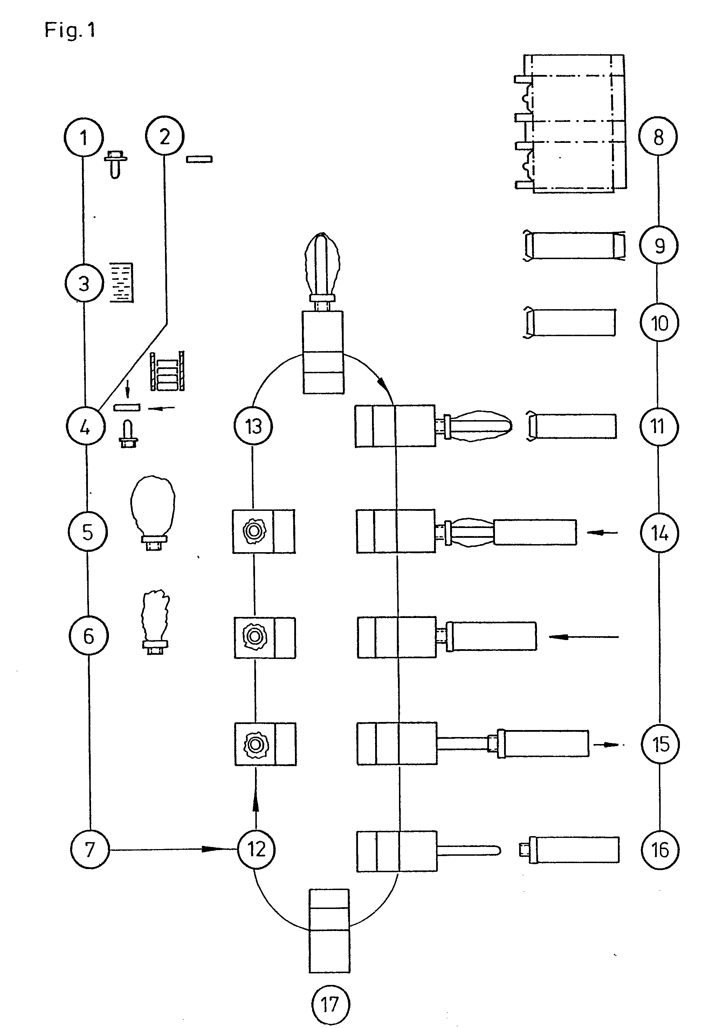

In dem beispielhaften Herstellungs- und Konfektionierschema nach Fig. 1 wird erfindungsgemäss bei 1 der Vorformling und bei 2 der Adapter hergestellt, bei 3 wird der Vorformling temperiert, bei 4 der Adapterdeckel von 2 zugeführt und über den temperierten Vorformling von 3 gestreift; bei 5 wird der Vorformling zur Blase umgeformt, bei 6 die fertige Blase entlüftet und bei 7 die mit dem Adapterdeckel vorkonfektionierte, entlüftete Blase bzw. Auskleidung zur weiteren Verarbeitung in der Endkonfektionseinrichtung zur Verfügung gestellt.

In einem parallellaufenden Produktionszweig wird bei 8 der Faltschachtelzuschnitt hergestellt, bei 9 die Faltschachtel geschlaucht, bei 10 der Faltschachtel-Boden verklebt und bei 11 die Faltschachtel zum weiteren Verarbeiten in der Endkonfektioniereinrichtung zur Verfügung gestellt. In letztere wird bei 12 die Auskleidung mit Adapterdeckel eingegeben und dabei auf einen Dorn gesteckt, dessen Länge etwa der gestreckten Länge der Auskleidung entspricht; der Dorn der Auskleidung schwenkt dann bis zu Position 13 in Einschubrichtung, wo die Faltschachtel bei 14 zentriert über Auskleidung und Dorn geschoben wird, bis der Adapterdeckel an der Faltschachtel einrastet. Schliesslich wird die konfektionierte Verpackung bei 15 vom Dorn abgezogen, die Verpackung kann bei 16 der Abfülleinrichtung zugeführt werden und der Aufnahmedorn schwenkt bei 17 zurück in die Betätigungsposition 12.

Dadurch, dass erfindungsgemäss ein einer Öffnung der Hülle angepasster Adapterdeckel bereits vor dem Aufblasen auf den Vorformling zum Herstellen der Auskleidung fixiert wird, lässt sich also das Herstellen der Verpackung einschliesslich des Zusammenfügens und Einschiebens von Auskleidung und Hülle in ein automatisches Konfektionsverfahren integrieren.

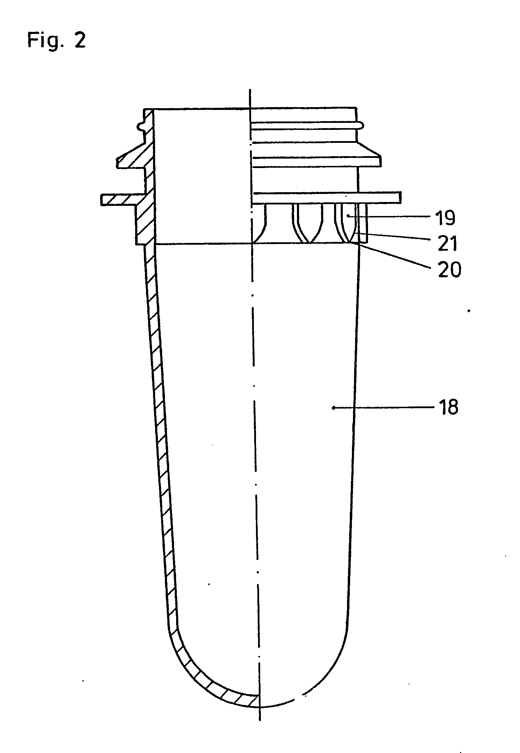

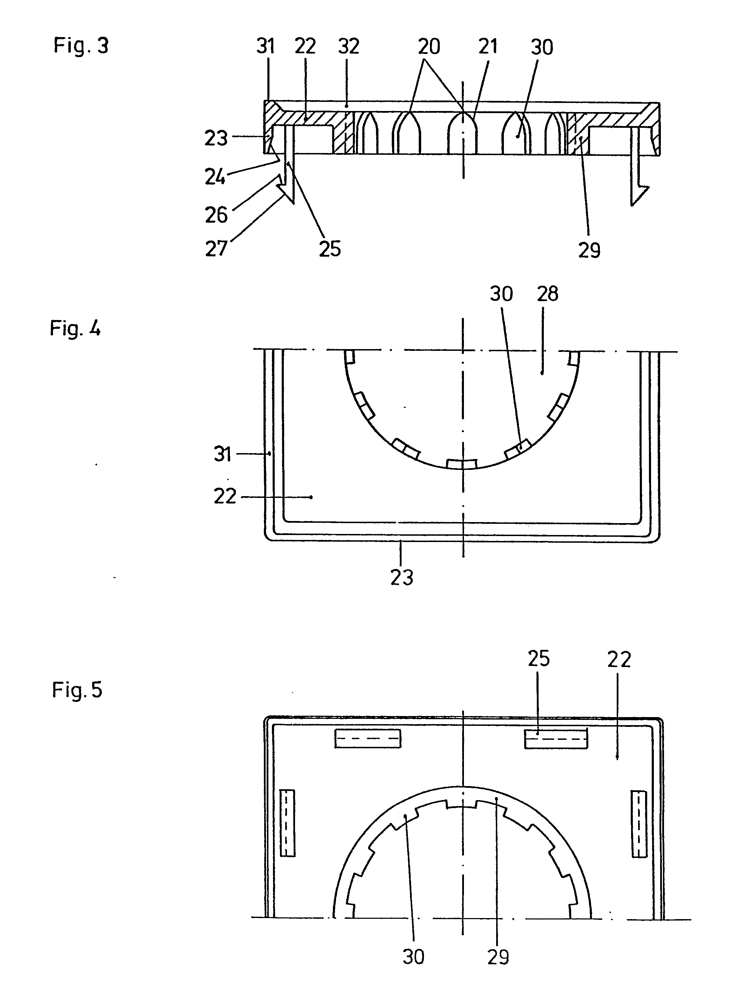

Ein zum Durchführen des erfindungsgemässen Verfahrens geeigneter Vorformling wird in Fig. 2 teilweise im Schnitt dargestellt und insgesamt mit 18 bezeichnet. Am Hals des Vorformlings 18 werden beispielhafte, in Spitzen 20 auslaufende Fixiernocken 19 vorgesehen. Diese Nocken 19 dienen zum radialen Fixieren bzw. zum Fixieren des Adapterdeckels 22 (vgl. Fig. 3 bis 5) in Umfangsrichtung. Die Spitzen 20 bewirken im Zusammenhang mit den daran anschliessenden Radien 21 ein selbständiges Einfädeln der Fixiernocken 30 des Adapterdeckels 22.

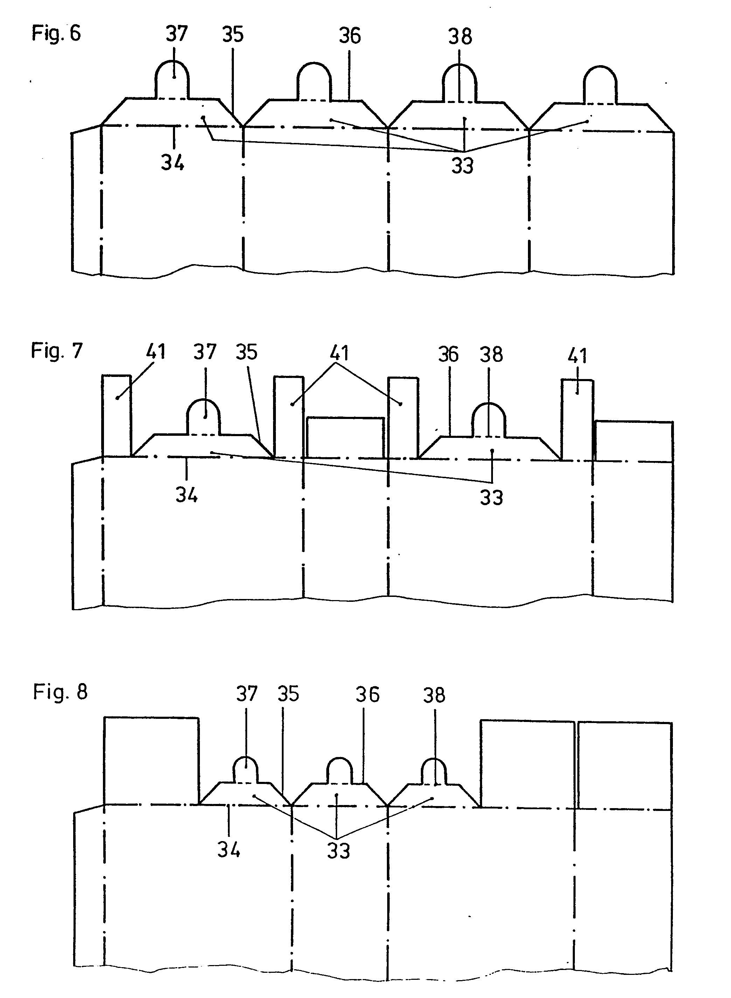

Ein solcher Adapterdeckel 22 wird in Fig. 3 in beispielhafter Ausführung im Schnitt dargestellt. Fig. 4 zeigt den gleichen Adapterdeckel in der Draufsicht und Fig. 5 in der Ansicht von unten. Dieser Adapterdeckel 22 besitzt einen nach unten gerichteten Rand 23, der — je nach Plazierung an der Faltschachtel oder in Abhängigkeit von der Faltschachtel-Formgebung (vgl. Fig. 6 bis 8) — umlaufend, dreiseitig oder nur an zwei gegenüberliegenden Seiten verlaufend anzuordnen ist. Am Rand 23 ist auf der Innenseite eine Einführungsschräge 24 vorgesehen. Jeder Randseite ist mindestens ein Arretiernocken 25 zugeordnet, der eine Hinterschneidung 26 sowie eine Einführungsschrägspitze 27 besitzt.

Erfindungsgemäss wird im Adapterdeckel 22 eine kreisförmige oder auch anders gestaltete — mehreckige, ovale — von einem Bund 29 umgebene Durchbrechung 28 vorgesehen. Am inneren Umfang des Bundes 29 bzw. am äusseren Umfang der Durchbrechung 28 werden vorspringende bzw. erhabene Fixiernocken 30 angeordnet, die entsprechend den Fixiernocken 19 des Vorformlings 18 über Radien 21 in Spitzen 20 auflaufen. Die Spitzen sind beim Vorformling 18 genau gegenläufig zu denen im Adapterdeckel 22 gerichtet.

Auf der Oberseite des Adapterdeckels befindet sich ein umlaufender Rand 21, der im fertigkonfektionierten Zustand eine Art Tropfenauffangwanne 32 bildet. Diese verhindert nach Anwendung und Wiederverschliessen der Verpackung mittels Dosierkappe durch den Verbraucher, dass eventuelle Produktreste aus der Dosierkappe über den Adapterrand hinaus auf die Umhüllung fliessen können.

Fig. 6 zeigt beispielhaft den oberen Teil eines Faltschachtelzuschnitts zum Herstellen einer quadratischen Faltschachtel, während in Fig. 7 dasselbe für eine rechteckige Faltschachtel mit mittig angeordneter Mündungsöffnung sowie in Fig. 8 für eine rechteckige Faltschachtel mit seitlich angeordneter Mündungsöffnung dargestellt wird. Die in Fig. 6 bis 8 dargestellten alternativen Faltschachtelzuschnitte weisen je nach gewünschter Plazierung des Adapterdeckels und damit der Mündungsöffnung der Auskleidung bzw. Blase an der Faltschachtel bzw. in Abhängigkeit von der Faltschachtelformgebung mindestens zwei Profillaschen 33 an der Kopfseite auf. Jede Profillasche 33 verläuft — ausgehend von einer angerollten Faltlinie 34 — beidseitig über verjüngende Seitenkanten 35 konisch zum Laschenende 36 hin.

Vorzugsweise soll sich in der Mitte des Laschenendes 36 eine etwa halbkreisförmige Verlängerung bzw. Zunge 37 befinden, die in Richtung der Linie des Laschenendes 36 von der Kartonaussenseite her eine Ritzung 38 enthält, so dass im geschlauchten Zustand die Zungen 37 leicht nach innen gekippt werden können bzw. von selbst nach innen kippen. Bei dieser oder ähnlicher Anordnung und entsprechendem Aufbau sind die Zungen 37 besonders vorteilhaft für die einfache Durchführbarkeit des erfindungsgemässen Verfahrens zum Konfektionieren von Auskleidung, Adapterdeckel und Hülle bzw. Faltschachtel.

Anstelle der in den Fig. 6 bis 8 dargestellten Ausführungsbeispiele sind auch andere Faltschachteln einsetzbar, die das Einrasten eines Adapterdeckels ermöglichen, z.B. durch Einkleben eines Kartonstreifens in den oberen Bereich des Faltschachtelzuschnitts, hinter dessen unteres Ende die Arretiernocken einrasten, oder durch Anbringen von Ausstanzungen im Zuschnitt oder Kartonstreifen, in die die Arretiernocken eingreifen können.

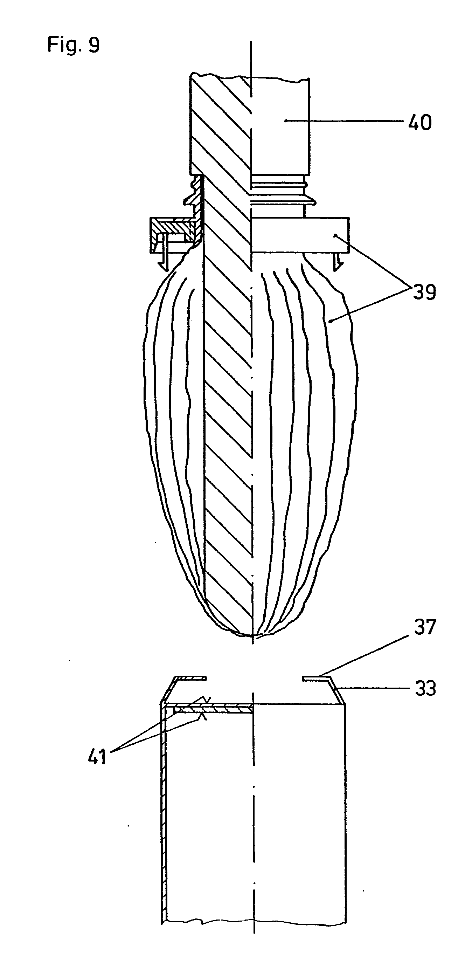

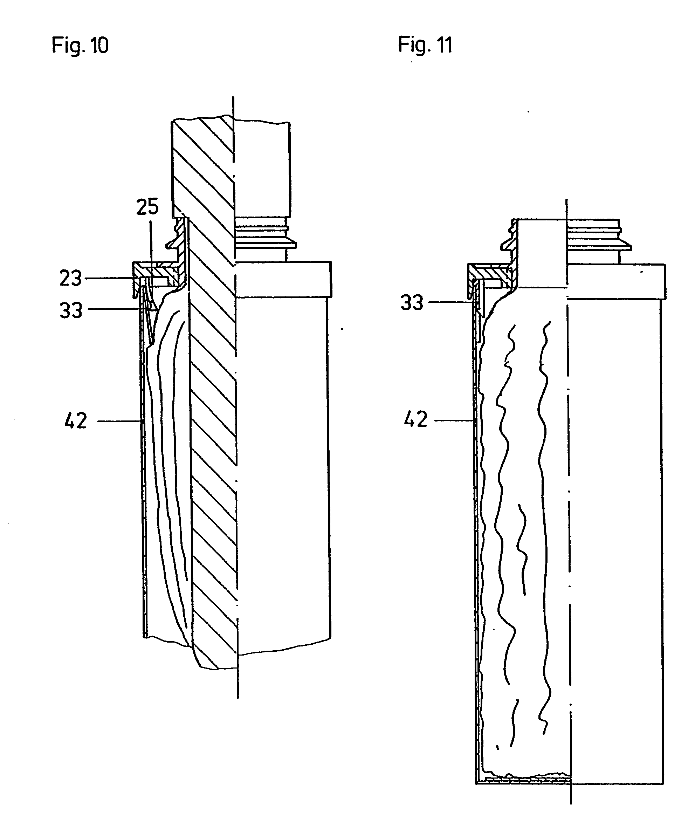

In Fig. 9 wird im Teilschnitt das Konfektionieren der Kombination von Auskleidung/Adapterdeckel mit der Faltschachtel gemäss Fig. 7 in der Stellung kurz vor dem Eintauchen der Auskleidung in die Schachtel schematisch dargestellt; Fig. 10 zeigt dann im Teilschnitt das Konfektionieren nach dem Eintauchen der Auskleidung kurz vor dem Einschnappen des Adapterdeckels; und Fig. 11 zeigt schliesslich im Teilschnitt die fertig nach dem erfindungsgemässen Verfahren konfektionierte Verpackung.

In Fig. 9 stecken vorkonfektioniert Adapterdeckel und Auskleidung als Einheit 39 auf dem Aufnahmedorn 40 und die Faltschachtel ist mit gemäss Fig. 7 verklebten Kopfseitenlaschen 41 mit ihrer Mündungsöffnung exakt über der Mitte des Aufnahmedorns positioniert. Die Profillaschen 33 stehen leicht nach innen geneigt mit abgewinkelten Zungen 37. Im Zustand nach Fig. 10 hat die eingetauchte Auskleidung die Profillaschen 33 ins Kartoninnere gedrückt. Die jetzt in die Faltschachtel eintauchenden Arretiernocken 25 geben leicht nach innen nach und lassen die Faltschachtelwand 42 mit den nach innen umgelegten Profillaschen 33 zwischen den Bund 23 und die Arretiernocken 25 einfädeln. Fig. 11 zeigt schliesslich den Zustand der Verpackung nach Abschluss des erfindungsgemässen Verfahrens. Die Faltschachtelwand 42 ist mit den umgelegten Profillaschen 33 zwischen dem Rand 23 und den Arretiernocken 25 eingeklemmt. Letztere haben sich in ihre ursprüngliche Lage zurückgestellt, weil die Hinterschneidung hinter das Profil-Laschenende 36 einschnappen konnte.

*Bezugszeichenliste*

 1  Vorformlingsherstellung
 2  Adapterherstellung
 3  Vorformling - Temperierung
 4  Adapterdeckel - Zuführung
 5  Vorformlings - Umformung
 6  Blasenentlüfung
 7  Endstation Streckblasmaschine
 8  Faltschachtel-Zuschnitt-Herstellung
 9  FS-Schlauchen
10  FS-Boden- und Kopfseitenlaschen-Verklebung
11  Endstation FS-Herstellung
12  Eingabestation Endkonfektionierung
13  Dorn-Schwenken
14  Vorschub Faltschachtel
15  Faltschachtel-Abzug
16  Endstation Konfektionieren
17  Dorn-Aufrichten
18  Vorformling
19  Fixiernocken
20  Spitzen
21  Radien
22  Adapter-Deckel
23  Rand
24  Einführungsschräge
25  Arretiernocken
26  Hinterschneidung
27  Einführungsschrägspitze
28  Durchbrechung
29  Bund

30  Fixiernocken
31  Rand
32  Tropfenauffangwanne
33  Profil-Laschen
34  Faltlinie
35  Seitenkanten
36  Laschenende
37  Zunge
38  Ritzung
39  Einheit
40  Aufnahmedorn
41  Kopfseitenlaschen
42  Faltschachtelwand

**Patentansprüche**

1. Verpackungsbehälter mit mechanisch stabilisierender, aus Papier, Pappe, Metall oder einer Kombination daraus bestehender Hülle, darin eingesetzter, dichtender, als Kunststoffblase mit angeformtem sowie aus der Hülle hervorragendem Halsteil ausgebildeter Auskleidung, welche ausgehend von einem geblasenen Vorformling in die, in einem getrennten Verfahren hergestellte Hülle eingesetzt ist, wobei die Hülle und die Auskleidung mit Hilfe eines mit der Auskleidung verbundenen, einer Öffnung der Hülle angepassten Adapterdeckels (22) miteinander gekoppelt sind, gekennzeichnet durch an den Hals des Vorformlings (18) angeformte, im Hinblick auf ein selbsttätiges Einfädeln von Fixiernocken (30) des Adapterdeckels (22) ausgebildete Fixiernocken (19) des Vorformlings (18) zum Festlegen des Adapterdeckels in Umfangsrichtung.

2. Auskleidung für einen Verpackungsbehälter nach Anspruch 1, gekennzeichnet durch Arretiermittel zum Festlegen, insbesondere Aufstecken auf die Hülle und durch angeformte, im Hinblick auf ein Einfädeln von Fixiernocken (19) des Vorformlings (18) ausgebildete Fixiernocken (30) am Rande einer Deckelöffnung zum Festlegen des Deckels (22) relativ zum Vorformling (18) in Umfangsrichtung.

3. Auskleidung für einen Verpackungsbehälter nach Anspruch 1 oder 2, gekennzeichnet durch Mittel (41) zum Einrasten des Adapterdeckels (22) am Rande bzw. Umfang einer zum Einschieben der Auskleidung dienenden und mit dem Deckel zu verschliessenden Öffnung der Hülle.

4. Auskleidung für einen Verpackungsbehälter nach einem oder mehreren der Ansprüche 1 bis 3, gekennzeichnet durch Mittel, insbesondere vorspringende Zungen (37), zum Erleichtern des Einführens und Einrastens der Baueinheit (39) von Auskleidung und Adapterdeckel (22).

**Claims**

1. Packaging container with a mechanically stabilising jacket consisting of paper, cardboard, metal or a combination thereof, a sealing liner which is inserted therein, is constructed as synthetic material bubble with a moulded-on neck part protruding out from the jacket and which — starting from a blown preform — is inserted into the jacket produced in a separate process, wherein the jacket and the liner are coupled each with the other with the aid of an adaptor cover (22) connected with the liner and matched to an opening of the jacket, characterised by locating dogs (19) of the preform (18), which are moulded on at the neck of the preform (18) and constructed with a view to an automatic threading-in of locating dogs (30) of the adaptor cover (22), for the location of the adaptor cover in circumferential direction.

2. Liner for a packaging container according to claim 1, characterised by locking means for locating, particularly for plugging onto the jacket and by moulded-on locating dogs (30), constructed with a view to a threading-in of locating dogs (19) of the preform (18), at the rim of a cover opening for the location of the cover (22) relative to the preform (18) in circumferential direction.

3. Liner for a packaging container according to claim 1 or 2, characterised by means (41) for the detenting of the adaptor cover (22) at the rim or circumference of a jacket opening which serves for the pushing-in of the liner and is to be closed off by the cover.

4. Liner for a packaging container according to one or more of the claims 1 to 3, characterised by means, particularly projecting tongues (37), to facilitate the introduction and detenting of the component unit (39) of liner and adaptor cover (22).

## Revendications

1. Récipient d'empallage à garniture comportant une enveloppe qui le stabilise mécaniquement et qui est formée de papier, de carton, de métal ou d'une association de ceux-ci, une garniture insérée dans l'enveloppe, assurant l'étanchéité, conçue sous la forme d'une bulle de matière synthétique sur laquelle est formé un col qui dépasse hors de l'enveloppe, garniture qui est insérée en partant d'une ébauche soufflée dans l'enveloppe fabriquée par un procédé séparé, l'enveloppe et la garniture étant accouplées entre elles à l'aide d'un couvercle adapteur (22), récipient caractérisé par le fait qu'il comporte des saillies de fixation (19) de l'ébauche (18), formées sur le col de cette dernière et constituées en vue d'un enfilage automatique de saillies de fixation (30) du couvercle adapteur (22), pour la fixation de celui-ci en direction cirfonférentielle.

2. Garniture pour récipient d'emballage selon la revendication 1, caractérisée par des moyens d'arrêt servant à la fixer, en particulier à la glisser sur l'enveloppe, et par des saillies de fixation (30) formées par la garniture elle-même, constituées en vue d'un enfilage de saillies de fixation (19) de l'ébauche (18), au bord d'une ouverture du couvercle, pour la fixation du couvercle (22) relativement à l'ébauche (18) en direction circonférentielle.

3. Récipient d'emballage selon l'une ou l'autre des revendications 1 ou 2, caractérisé par le fait qu'il comporte des moyens (41) servant à arrêter le couvercle adapteur (22) au bord ou à la cirfonférence d'une ouverture de l'enveloppe, servant à insérer la garniture et pouvant être fermée par le couvercle adapteur.

4. Récipient d'emballage selon l'une quelconque des revendications 1 à 3, caractérisé par le fait qu'il comporte des moyens, en particulier des languettes en saillie (37), servant à faciliter l'introduction et l'arrêt de l'ensemble structural (39) de garniture et de couvercle adapteur (22).

Fig.1

## Fig. 2

— 19
— 21
— 20

— 18

Fig. 3

31  22  32  20  21  30

23

24

26

27  25

29

Fig. 4

30  28

31

22

23

Fig. 5

25  22

30  29

Fig. 6

37    35    36    38

34    33

Fig. 7

41    37    35    41    36    38    41

34    33

Fig. 8

37    35    36    38

34    33

Fig. 9

Fig. 10

Fig. 11